# EUROPEAN PATENT APPLICATION

(11) **EP 1 881 023 A1**
(43) Date of publication of application: **23.01.2008**
(21) Application number: 06117677.2
(22) Date of filing: 21.07.2006
(51) Int. Cl.: C08J 9/36

(54) **Porous materials and process for their production**

(71) Applicant: BASF AKTIENGESELLSCHAFT, 67056 Ludwigshafen (DE)
(72) Inventor: Frenzel, Stefan, Dr., 68161, Mannheim (DE); Gonzales, Denis, Alfred, 1150, Brussel (BE); Bogaert, Iris, 2800, Mechelen (BE); Häberle, Karl, Dr., 67346 Speyer (DE); Schrof, Wolfgang, Dr., 67271, Neuleiningen (DE); Schwendemann, Volker, 67434, Neustadt (DE)

(57) **Abstract**

The present invention relates to a porous material comprising
(a) an erodible open-cell foam with a density in the range from 5 to 1,000 kg/m³ and with an average pore diameter in the range from 1 µm to 1 mm,
(b) a polymer matrix which is water-soluble or water-swellable or readily erodible,
(c) an active ingredient selected from the group of surfactants, organic solvents, complexing agents, and bleaching agents,

wherein said active ingredient (c) is absorbed by or dissolved in said polymer matrix (b) or chemically linked to said polymer matrix (b).

## Description

The present invention relates to a porous material comprising
(a) an erodible open-cell foam with a density in the range from 5 to 1,000 kg/m³ and with an average pore diameter in the range from 1 µm to 1 mm,
(b) a polymer matrix which is water-soluble or water-swellable or readily erodible,
(c) an active ingredient selected from the group of surfactants, organic solvents, complexing agents, and bleaching agents,
wherein said active ingredient (c) is absorbed by or dissolved in said polymer matrix (b) or chemically linked to said polymer matrix (b).

The present invention further relates to a process for production of inventive porous materials, and to the use of inventive porous materials for production of cleaning materials, filters, humidifiers, water distributors, packaging elements, sound-deadening elements, or buildings-insulation materials.

Foams, specifically those which are known as open-cell foams, are used in numerous sectors. In particular open-cell foams composed of synthetic materials have proven versatile. By way of example, mention may be made of seat cushions, filter materials, air-conditioning porous materials, and automobile parts, and also cleaning materials.

Foams are nowadays also frequently used as cleaning materials, such as synthetic sponges and wipers.

Use of erodible foam, such as melamine-formaldehyde resin foam, referred to herein as melamine foam, and phenolic foam as a substrate of a hard surface cleaning implement is well known. Indeed, cleaning implements of cut or moulded pieces of melamine foam have become popular to remove soils and/or stains from hard surfaces (i.e., cleaning of hard surfaces) such as tiles, walls, floors, sanitary fittings such as sinks, showers, shower curtains, wash basins, WCs, household appliances including, but not limited to, refrigerators, freezers, washing machines, automatic dryers, ovens, microwave ovens, dishwashers and so on.

It has been observed that melamine foam shows an excellent soil and/or stain removal performance when used to clean hard surfaces. It has been observed that melamine foam when wetted with an appropriate solvent, such as tap water, removes soils and/or stains from a hard surface when said hard surface is brought into contact with said wet melamine foam and wiped therewith. By "wiped" or "wiping" it is meant wiping, sweeping, rubbing or the like so as to exert manual force upon a surface to be cleaned.

Although melamine foam is generally quite effective in removing soils and/or stains from hard surfaces, consumers still may find it difficult to remove certain kind of tough stains with melamine foam even though extra rubbing force is applied onto the stains. For example, common adhesive resin-like or semi-solid denatured oil stains from food, coloured stains, such as tea, coffee, fruit juice, grass, and carotenoid stains, permanent marker and ink, mould and mildew, fungus, etc. are often difficult to remove with a plain melamine foam.

To improve the cleaning performance of a sponge, such as melamine foam over certain type of tough stains, some prior art, for example, WO 05/15215, suggests to use a sponge together with a detergent composition. Sponge and aqueous detergent can be provided either separately in a kit or the sponge is impregnated with the detergent. However, consumers still may experience inconvenience in applying a detergent composition first and then scrubbing with a sponge. Also, a sponge, such as melamine foam impregnated with an active agent tends to release the active agent undesirably quickly, leading to a total loss of the active agent after the first several uses. As a consequence, poor cleaning properties are observed after several uses due to the active agent only being available for a short time. In addition, when an active agent releases very quickly in the first or second use, the undesirable high level of active agent may require extra rinsing.

Thus, the need exists for an improved cleaning implement that is able to clean tough stains satisfactorily, provide a controlled-release of an active agent and being convenient for use.

An object was therefore to provide materials that avoid the disadvantages of the materials known from the prior art. A further object was to provide a process for production of novel materials. Another object was to provide uses for inventive materials, and an object was to provide a method for the use of inventive materials.

The porous materials defined at the outset have accordingly been found, and said porous materials are also termed inventive porous materials hereinafter.

Inventive porous materials are open-cell foams, i.e. foams in which at least 50% of all of the lamellae are open, preferably from 60 to 100%, and particularly preferably from 65 to 99.9%, determined to DIN ISO 4590.

Inventive porous materials are preferably based on rigid foams, which for the purposes of the present invention are foams whose compressive strength, determined to DIN 53577, is 1 kPa or above at 40% compression.

Inventive porous materials have a density in the range from 5 to 1000 kg/m³, preferably from 6 to 500 kg/m³ and particularly preferably in the range from 7 to 300 kg/m³.

Inventive porous materials have an average pore diameter (number-average) in the range from 1 µm to 1 mm, preferably from 50 to 500 µm, determined via evaluation of micrographs of sections.

In one embodiment of the present invention, inventive porous materials have a BET surface area in the range from 0.1 to 50 m²/g, preferably from 0.5 to 20 m²/g, determined according to DIN 66131.

Inventive porous materials comprise of
(a) an erodible open-cell foam with a density in the range from 5 to 1,000 kg/m³ and with an average pore diameter in the range from 1 µm to 1 mm,
(b) a polymer matrix which is water-soluble or water-swellable,
(c) an active ingredient selected from the group of surfactants, organic solvents, complexing agents, and bleaching agents,
wherein said active ingredient (c) is absorbed by or dissolved in said polymer matrix (b) or chemically linked to said polymer matrix (b).

For the purposes of the present invention, the unmodified erodible open-cell foams (a) that are part of the inventive porous materials are very generally also termed unmodified foams (a) or foams (a). The unmodified open-cell foams (a) are described in more detail below.

Erodible in the connection with foam (a) herein refers to foams which can crumble into smaller particles and which can peel off by friction, especially by manual friction.

Open-cell foams (a) in the context of the present invention are particularly foams (a) in which at least 50% of all of the lamellae are open, preferably from 60 to 100%, and particularly preferably from 65 to 99.9%, determined to DIN ISO 4590. Said cells can be shaped, e.g. like channels.

Foams (a) are preferably rigid foams, which for the purposes of the present invention are foams whose compressive strength, determined to DIN 53577, is 1 kPa or more at 40% compression.

Foams (a) have a density in the range from 5 to 500 kg/m³, preferably from 6 to 300 kg/m³, and particularly preferably in the range from 7 to 300 kg/m³.

Foams (a) have an average pore diameter (number-average) in the range from 1 µm to 1 mm, preferably from 50 to 500 µm, determined via evaluation of micrographs of sections.

In one embodiment of the present invention, foams (a) may have at most 20, preferably at most 15, and particularly preferably at most 10 pores per m² of diameter in the range up to 20 mm. The remaining pores usually have a smaller diameter.

In one embodiment of the present invention, foams (a) have a BET surface area in the range from 0.1 to 50 m²/g, preferably from 0.5 to 20 m²/g, determined to DIN 66131.

In one embodiment of the present invention, foams (a) have a sound-absorption level above 50%, measured to DIN 52215 at a frequency of 2000 Hz and a layer thickness of 50 mm of the relevant foam (a).

In one specific embodiment of the present invention, foams (a) have a sound-absorption level above 0.5, measured to DIN 52212 at a frequency of 2000 Hz and a layer thickness of 40 mm of the respective foam (a).

Foams (a) may have any desired geometric shapes, e.g. sheets, spheres, cylinders, powders, cubes, flakes, blocks, saddles, bars, or square columns. The size dimensions of foams (a) used as starting material are non-critical. In one embodiment of the present invention, the starting material comprises foams (a) composed of synthetic organic material, and preferably comprises melamine foams.

Melamine foams particularly suitable as starting material for carrying out the inventive production process are known per se. By way of example, they are produced via foaming of
i) a melamine-formaldehyde precondensate which may contain other carbonyl compounds, such as aldehydes, co-condensed alongside formaldehyde,
ii) one or more blowing agents,
iii) one or more emulsifiers,
iv) one or more hardeners.

Melamine-formaldehyde precondensates i) may be non-derivatized precondensates, or else may be derivatized precondensates, and by way of example up to 20 mol% of the melamine may have been replaced by other thermoset-forming materials known per se, e.g. alkyl-substituted melamine, urea, urethane, carboxamides, dicyandiamide, guanidine, sulfuryl amide, sulfonamides, aliphatic amines, phenol, and phenol derivatives. Examples of other carbonyl compounds which may be present co-condensed alongside formaldehyde in derivatized melamine-formaldehyde precondensates are acetaldehyde, trimethylolacetaldehyde, acrolein, furfurol, glyoxal, phthalaldehyde and terephthalaldehyde.

Suitable blowing agents ii) are: water, inert gases, in particular carbon dioxide, and physical blowing agents. Physical blowing agents are compounds which are inert toward the starting components and are usually liquid at room temperature and vaporize under the conditions of the urethane reaction. The boiling point of these compounds is preferably below 110°C, in particular below 80°C. Among physical blowing agents are also inert gases which are introduced into the starting components i) and ii) or dissolved therein, for example carbon dioxide, nitrogen or noble gases.

Suitable compounds which are liquid at room temperature are usually selected from the group consisting of alkanes and/or cycloalkanes having at least 4 carbon atoms, dialkyl ethers, esters, ketones, acetals, fluoroalkanes having from 1 to 8 carbon atoms and tetraalkylsilanes having from 1 to 3 carbon atoms in the alkyl chain, in particular tetramethylsilane.

Examples which may be mentioned are: propane, n-butane, isobutane and cyclobutane, n-pentane, isopentane and cyclopentane, cyclohexane, dimethyl ether, methyl ethyl ether, methyl tert-butyl ether, methyl formate, acetone and fluorinated alkanes which can be degraded in the troposphere and therefore do not damage the ozone layer, e.g. trifluoromethane, difluoromethane, 1,1,1,3,3-pentafluorobutane, 1,1,1,3,3-pentafluoropropane, 1,1,1,2-tetrafluoroethane, 1,1,1-trifluoro-2,2,2-trichloroethane, 1,1,2-trifluoro-1,2,2-trichloroethane, difluoroethanes and heptafluoropropane. The physical blowing agents mentioned can be used either alone or in any combinations with one another.

The use of perfluoroalkanes for producing fine cells is known from EP-A 0 351 614.

Emulsifiers iii) used may be conventional non-ionic, anionic, cationic, or betainic surfactants, in particular C₁₂-C₃₀-alkylsulfonates, preferably C₁₂-C₁₈-alkylsulfonates, and polyethoxylated C₁₀-C₂₀-alkyl alcohols, in particular having the formula R¹-O(CH₂-CH₂-O)ₓ-H, where R¹ is selected from C₁₀-C₂₀-alkyl and x may be, by way of example, a whole number in the range from 5 to 100.

Suitable hardeners iv) are, in particular, acidic compounds such as inorganic Brønsted acids, e.g. sulfuric acid or phosphoric acid, organic Brønsted acids such as acetic acid or formic acid, Lewis acids and also latent acids.

Examples of suitable melamine foams are described in EP-A 0 017 672.

Foams (a) may also comprise additives customary in foam chemistry, for example antioxidants, flame retardants, fillers, colorants such as pigments or dyes, and biocides, such as

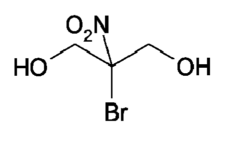

Inventive porous systems furthermore comprise of a polymer matrix (b) which is water-soluble or water-swellable.

Water-soluble in the context with the present invention refers to polymer matrices (b) whose solubility in water (pH-value 7, 25°C) is more than 1.5 g/l, preferably more than 2 g/l.

Water-swellable in the context of the present inventions refers to polymer matrices (b) that have a water uptake at 20°C of at least 10 % by weight, preferably of at least 20 % by weight, measured according to ISO 8361.

Readily erodible in the context of the present invention refers to polymer matrices (b) that do not at all or not significantly increase the mechanical strength of foam (a).

Water-soluble polymer matrices (b), in the context of the present invention also being referred to as water-soluble polymers (b), as well as water-swellable polymer matrices (b), in the context of the present invention also referred to as water swellable polymers (b), can be homo- or copolymers. Readily erodible polymer matrices (b) can also be referred to as erodible polymers (b).

In one embodiment of the present invention, water-soluble polymers (b) or water-swellable polymers (b) or erodible polymers (b) are pasty polymers or copolymers that can incorporate at least one active ingredient (c).

In one embodiment of the present invention, water-soluble polymers (b) or water-swellable polymers (b) or erodible polymers (b) are film forming polymers that are deposited in the pores of foam (a) in the form of one or more films.

In another embodiment of the present invention, water-soluble polymers (b) or water-swellable polymers (b) or erodible polymers (b) are particulate polymers, for example bead shaped or powder like, with, e.g., an average diameter of 1 to 400 µm, preferably 10 to 100 µm, particular preferably 10 to 30 µm (number average). Preferably, the average particle size of particulate water-soluble polymers (b) or water-swellable polymers (b) is below the average pore diameter of foam (a).

In one embodiment of the present invention, water-soluble polymers (b) or water-swellable polymers (b) or erodible polymers (b) can be cross-linked or preferably not cross-linked, branched or non-branched.

Suitable water-soluble polymers (b) and water-swellable polymers (b) can be selected from polyethylene glycols (polyethylene oxide) which are solid at room temperature, cationic polymers such as polyvinyl pyrrolidone, polyvinyl alcohol and partially hydrolyzed polyvinyl acetate, polyacrylamide, polysaccharide, such as agar, dextran, guatti gum, acacia, guar, starch, modified starch, polynucleotide, polypeptide (polyglutamic), polyacrylates, cross-linked polyacrylate, physically cross-linked polyethylene oxide, such as Aquacalk™ from Sumitomo, polyalkyleneglycol-vinylacetate graft copolymers, and water-soluble anionic polymers such as copolymers from acrylic acid and acrylates such as C₁-C₁₀-alkyl esters of (meth)acrylic acid and copolymers from acrylic acid and ethylenic unsaturated dicarboxylic acids such as fumaric acid, itaconic acid, and particularly maleic acid.

Preferred water-soluble polymers (b) and water-swellable polymers (b) can be selected from polyethylene glycols that are solid at room temperature, especially polyethylene glycols with a molecular weight (M_{w}) in the range from 500 to 10,000 g/mol, modified starch such as partially hydrolyzed starch or partially oxidized starch, cationic polymers such as polyvinyl pyrrolidone and copolymers of polyvinyl pyrrolidone, and water-soluble anionic polymers such as copolymers from acrylic acid and acrylates such as C₁-C₁₀-alkyl esters of (meth)acrylic acid and copolymers from acrylic acid and ethylenic unsaturated dicarboxylic acids such as fumaric acid, itaconic acid, and particularly maleic acid.

Further preferred water-soluble polymers (b) and water-swellable polymers (b) can be selected from ethylene-vinyl acetate copolymer resins, in particular random ethylene-vinyl acetate copolymer resins, in particular with melt flow indices in the range of 1 to 100 g/10 min at 190°C, determined according to, e.g., to ASTM D1238, polyether-block co-polyamide polymers, in particular polyethylene glycol block co-poly-ε-caprolactame comprising 2 to 50 blocks/molecule, polyether-polyester block copolymers, in particular polyethylene oxide-polyester block copolymers of aromatic dicarboxylic acids such as phthalic acid, isophthalic acid, and terephthalic acid, rosin esters, and poly-α-methylstyrene resins.

Particularly preferred water-soluble polymers (b) are selected from cationic polymers. Cationic polymers in the context of the present invention comprise at least one cationic unit per molecule. A cationic unit is understood to mean a moiety which is - when polymerized into the structure of the cationic polymer - capable of bearing a cationic charge within the pH range of from 2 to 8. Said cationic unit is not necessarily protonated at every pH value within the range of 2 to 8. Examples for cationic polymers include homo- and copolymers such as polyvinyl pyrrolidone and copolymers of polyvinyl pyrrolidone, polyacrylamide, cationic polypeptides. Suitable cationic polymers further include homo- and copolymers of N,N-dimethylamino alkyl (meth)acrylates, especially N,N-dimethylaminoethyl methacrylate, vinyl pyrrolidones, vinyl imidazoyls, vinyl ethers having di-C₁-C₆-alkyl amino groups, vinyl pyridines, C₁-C₆-alkyl (meth)acrylamides, di-C₁-C₆-alkyl (meth)acrylamides, di-ω-C₁-C₆-alkyl amino C₂-C₄-alkyl (meth)acrylamides such as N,N-Dimethylamino ethylacrylamide, di-ω-C₁-C₆-alkyl amino C₂-C₄-alkyl such as (meth)acrylesters N,N-Dimethylamino ethylacrylate and amino C₁-C₆-alkyl acylamides. Further examples include polyethylene imine which is commercially available as Lupasol® from BASF AKtiengeselischaft, polyvinyl amine, polyvinyl amine-vinyl alcohol copolymer, polyvinyl amine-vinyl formamide copolymer, polyamino acids such as copolymers from L-lysine /lauric acid particularly in a molar ratio of 10:1, L-lysine/aminocaproic acid/adipic acid particularly in a molar ratio of 5: 5:1, L-lysine/aminocaproic acid/ethylhexanoic acid particularly in a molar ratio of 5:3:1), polylysine-cocaprolactam, polylysine hydrobromide, and cross-linked polylysine.

Suitable cationic polymers can be selected from linear homo- or copolymers or optionally branched, grafted and/or cross-linked copolymer. Preferably, cationic polymers herein comprise at least 5 amino groups or amido groups per polymer molecule and have a number average molecular weight M_{w} ranging from 500 to 10,000,000 g/mol, preferably from 600 to 40,000 g/mol.

Examples for polyalkyleneglycol-vinylacetate graft copolymers can, e.g., be made from a base polymer (A) selected from:
(A1) Polyethylene glycols, which may be capped with one or two C₁-C₂₅-Alkyl-groups, or preferably uncapped polyethylene glycols, each with an average molecular weight Mₙ in the range from, e.g., 1,500 to 20,000 g/mol, particularly preferably in the range from 2,500 to 15,000 g/mol;
(A2) Copolymers of ethylene oxide and propylene oxide and/or butylene oxide with an ethylene oxide content of at least 50% by weight, capped with one or two C₁-C₂₅-alkyl groups, or preferably uncapped, each with an average molecular weight Mₙ in the range from, e.g., 1,500 to 20,000 g/mol, particularly preferably in the range from 2,500 to 15,000 g/mol;
(A3) chain extended products obtainable by conversion of polyethylene glycols (A1) or copolymers of ethylene oxide and propylene oxide and/or butylene oxide (A2) with C₂-C₁₂-dicarboxylic acids oder C₂-C₁₂-dicarboxylic acid (m)ethyl esters or C₆-C₁₈-diisocyanates. Particularly preferably, chain extended products (A3) can have an average molecular weight Mₙ in the range from 2,500 to 25,000 g/mol.

To graft any of the base polymers (A1) to (A3), vinyl esters such as vinyl acetate or vinyl propionate are preferred. In one embodiment of the present invention, vinyl esters are the sole monomer for grafting. In another embodimentment of the present invention, 1 to 50 mol-% of vinyl ester are replaced by (meth)acrylic acid.

In one embodiment of the present invention, the aforementioned graft copolymers can have an average molecular weight M_{w} from 3,000 to 100,000 g/mol.

In a special embodiment of the present invention, water-soluble polymer (b) or water-swellable polymer (b) is selected from cyclodextrins. Both natural and chemically modified cyclodextrins available in the art can be used in the present invention. Naturally occurring cyclodextrins include α-, β-, and γ-cyclodextrins. Modifications of natural cyclodextrins can also be used and include, for example, glucosyl-α-cyclodextrin, maltosyl-α-cyclodextrin, glucosyl-β-cyclodextrin, and maltosyl-β-cyclodextrin or polymerized cyclodextrin. Chemically modified cyclodextrins may be generated by reaction of the hydroxyl groups lining the upper and lower ridges of the toroid of cyclodextrin with, for example, methyl, hydroxyethyl, hydoxypropyl, carboxymethyl, or acetyl.

Cyclodextrins have some solubility in water and a number of other solvents. Release of the active ingredient (c) can be further controlled by making cyclodextrin/active ingredient (c) complexes having a suitable solubility in water. Suitable solubility of the cyclodextrin/active ingredient (c) complex in water is from 0.1 g to 100 g, or from 0.5 g to 20 g, or from 1g to 5 g of complexes per 100 g water at 25°C. In one embodiment herein, the cyclodextrin is a β-cyclodextrin having a water solubility of 1.8 g to 2 g per 100 g water at 25°C.

Same method for loading an active agent into foam (a) as described above can be used for binding cyclodextrin with an active agent (c). In one embodiment herein, the molar ratio of cyclodextrin to the active ingredient (c) is from 20:1 to 1:1 mol equivalent, or from 10:3 to 10:8.

In a special embodiment of the present invention, water-swellable polymer (b) is selected from inorganic polymeric materials in the form of particulate porous carriers. Particulate porous carrier can absorb active ingredient (c) and can later release said active ingredient (c) either over an extended period of time or as a result of an external pressure, moisture or other stimuli. Particulate porous carrier can be a material selected from the group consisting of porous carbon, amorphous silicate, crystalline non-layered silicate, layered silicate, clay, metal oxide (e.g. alumina, aluminates), zeolite, sodalite, macroporous zeolite, chitin micro bead, carboxyalkylcellulose, carboxyalkylstarch, foam, porous starch, chemically modified starch, starch derivative, low and high molecular weight sugar, silica such as fumed and precipitated silica, carbon black and mixtures thereof. Preferably, particulate porous carrier is selected from Zeolite A having a primary particle diameter of from 0.1 to 10 µm (coulter counter). In another preferred embodiment, particulate porous carriers may themselves be encapsulated with a material, such as starch. Encapsulation of particulate porous carrier provides increased protection prior to use.

A typical method for loading an active ingredient (c) includes the steps of spraying an active ingredient (c) or a solution of an active ingredient (c) onto said particulate porous carrier followed by stirring the solid mixture or suspension to obtain the active agent-loaded particulate porous carrier. Another simple method for loading the active agent into the particulate porous carrier is to deposit the particulate porous carrier onto a foam (a) shaped as a substrate and then spray the active ingredient (c) or a solution of the active ingredient (c) onto the substrate. The weight ratio of the particulate porous carrier to active ingredient (c) is from 100: 1 to 1: 1, or from 100: 20 to 100: 60.

Suitable erodible polymers (b) can be selected from waxes. Examples for waxes are natural waxes such as paraffin wax, microcrystalline wax, bio-wax, such as lanolin, candellila, carnauba, mineral wax, such as montane wax, and synthetic wax, such as polyethylene wax with an average molecular weight (Mₙ) in the range of 500 to 20,000 g/mol, and polypropylene wax with an average molecular weight (Mₙ) in the range of 500 to 20,000 g/mol.

In one embodiment of the present invention, suitable water-soluble, water-swellable, or erodible polymers (b) have a melting point above 25°C, preferably above 50°C, determined via DSC.

In one embodiment of the present invention, suitable watersoluble, water-swellable, or erodible polymers (b) can have a molecular mass Mₙ in the range from 500 to 1,000,000 g/mol, preferably from 1,500 to 500,000 g/mol, particularly preferably from 2,000 to 200,000 g/mol, and very particularly preferably up to 20,000 g/mol, determined, e.g., by gel permeation chromatography (GPC).

The inventive porous materials further comprise an active ingredient (c) selected from the group of surfactants, organic solvents, complexing agents, and bleaching agents. Said active ingredient (c) can be absorbed by or dissolved in or chemically linked to polymer matrix (b).

Suitable surfactants can be selected from anionic, cationic, zwitterionic and non-ionic surfactants, non-ionic surfactants being preferred.

Suitable zwitterionic surfactants useful herein include amine oxides, betaine or ammonium sulfate or ammonium carboxylate, having the following formula R²R³R⁴NO, R²R³R⁴N-A¹-SO₄ or R²R³R⁴N-A¹-CO₂ wherein each of R², R³ and R⁴ is independently a substituted or unsubstituted, linear or branched alkyl group of from 1 to 30 carbon atoms, particularly from 8 to 18 carbon atoms. A¹ is a spacer which may comprise 1 to 10 carbon atoms. Preferably A¹ is a spacer selected from -CH₂-, -(CH₂)-, -C(CH₃)₂-, -(CH₂)₄- and in particular -(CH₂)₃-. Preferred amine oxides for use herein are for instance natural blend C₈-C₁₀ alkylamine oxides, and C₁₂-C₁₆ alkylamine oxides, such as cetyl dimethyl amine oxide. Preferred betaines for use herein is for instance cocamidopropyl betaine and lauramidopropyl betaine.

Suitable anionic surfactants are for example alkali metal and ammonium salts of alkyl sulfates (alkyl radical: C₈ to C₁₂), of sulfuric acid monoesters formed from ethoxylated alkanols (degree of ethoxylation: 4 - 30, alkyl radical: C₁₂-C₁₈) and from ethoxylated alkylphenols (degree of ethoxylation: 3 - 50, alkyl radical: C₄-C₁₂), of alkylsulfonic acids (alkyl radical: C₁₂-C₁₈) and of alkylarylsulfonic acids (alkyl radical: C₉-C₁₈, aryl: naphthyl or especially phenyl) and of sulfosuccinates such as sulfosuccinic mono- and diesters.

In one embodiment of the present invention, suitable anionic surfactants include C₁-C₄-alkyl diphenyl ether sulphonates and alkyl carboxylates. Other suitable anionic surfactants herein include water soluble salts or acids of the formula R⁵OSO₃M wherein R⁵ is preferably a C₁₀-C₂₄ hydrocarbyl, preferably C₁₂-C₁₈ alkyl or hydroxyl-C₁₂-C₁₈-alkyl, and M is H or ammonium or substituted ammonium or a metal cation, such as sodium, potassium, or lithium. Other suitable anionic surfactants include soap salts, C₉-C₂₀ linear alkylbenzenesulfonates, C₈-C₂₂ primary or secondary alkylsulfonates, sulfonated polycarboxylic acids, C₈-C₂₄ alkylpolyglycolethersulfates (containing up to 10 moles of ethylene oxide); alkyl ester sulfonates, sulfates of alkylpolysaccharides, alkyl polyethoxy carboxylates, such as those of the formula R⁶O(CH₂CH₂O)ₖCH₂COO-M⁺ wherein R⁶ is a C₈-C₂₂ alkyl, branched or linear, k is an integer from 0 to 10, and M is as defined above. Resin acids and hydrogenated resin acids are also suitable anionic surfactants. Further examples are given in "Surface Active Agents and Detergents" (Vol. I and II by Schwartz, Perry and Berch). A variety of suitable surfactants are also generally disclosed in US 3,929,678.

Suitable cationic surfactants are in general C₆-C₁₈-alkyl-, -aralkyl- or heterocyclyl-containing primary, secondary, tertiary or quaternary ammonium salts, alkanolammonium salts, pyridinium salts, imidazolinium salts, oxazolinium salts, morpholinium salts, thiazolinium salts and also salts of amine oxides, quinolinium salts, isoquinolinium salts, tropylium salts, sulfonium salts and phosphonium salts. By way of example there may be mentioned dodecylammonium acetate or the corresponding hydrochloride, the chlorides or acetates of the various 2-(N,N,N-tri-methylammonium)-ethylparaffinic esters, N-cetylpyridinium chloride, N-laurylpyridinium sulfate and also N-cetyl-N,N,N-trimethylammonium bromide, N-dodecyl-N,N,N-trimethylammonium bromide, N,N-distearyl-N,N-dimethylammonium chloride and also the gemini surfactant N,N'-(lauryldimethyl)ethylenediamine dibromide. Numerous further examples are to be found in H. Stache, Tensid-Taschenbuch, Carl-Hanser-Verlag, Munich, Vienna, 1981 and in McCutcheon's, Emulsifiers & Detergents, MC Publishing Company, Glen Rock, 1989. Preferred cationic surfactants for use herein are trimethyl quaternary ammonium compounds, such as myristyl trimethylsulfate, cetyl trimethylsulfate and/or tallow trimethylsulfate.

Suitable non-ionic surfactants are for example ethoxylated mono-, di- and tri-alkylphenols (degree of ethoxylation: 3 - 50, alkyl radical: C₄-C₁₂) and also alkoxylated, especially propoxylated or ethoxylated fatty alcohols (degree of alkoxylation, in particular ethoxylation: 3 - 80, alkyl radical: C₆-C₃₆). Commercially available examples are the Lutensol® brands from BASF Aktiengesellschaft and the Triton® brands from Union Carbide.

Suitable organic solvents that may be useful as active ingredient (c) can be organic solvents having a good dissolving ability for greasy stains. Preferred organic solvents include those which are at least partially water-miscible. Exemplary organic solvents include alcohols such methanol, ethanol, isopropanol, ethers, such as diethylene glycol diethylether, diethylene glycol dimethylether, propylene glycol dimethylether, propylene glycol monomethylether, propylene glycol monoethylether, propylene glycol monopropylether, propylene glycol monobutylether, ethylene glycol monobutylether, dipropylene glycol monomethylether, dipropylene glycol monopropyl ether, dipropylene glycol monobutyl ether, diethyleneglycol monobutylether, esters such as acetates or propionates of C₁-C₆-monoalkylethers of ethylene glycol or propylene glycol, such as propylene glycol monomethyl ether acetate, N-methyl pyrolidone and tetrahydrofuran. Mixtures of several organic solvents can also be used.

Suitable complexing agents (hereinafter also named chelating agents) include, but are not limited to, carboxylates, especially amino carboxylates, phosphates, phosphonates, polyfunctionally-substituted aromatic compounds, polyamines, and mixtures thereof. Suitable phosphonate chelating agents useful herein include alkali metal ethane 1-hydroxy diphosphonates (HEDP), alkylene poly(alkylene phosphonate), and amino phosphonate compounds, including amino tri(methylene phosphonic acid) (ATMP), nitrilo trimethylene phosphonates (NTP), ethylene diamine tetra methylene phosphonates, and diethylene triamine penta methylene phosphonates (DTPMP).

Suitable amino carboxylates to be used herein as chelating agents include ethylene diamine tetra acetates, diethylene triamine pentaacetates, diethylene triamine pentaacetate (DTPA), N- hydroxyethylethylenediamine triacetates, nitrilotri-acetates, ethylenediamine tetrapropionates, triethylenetetraaminehexa-acetates, ethanol-diglycines, propylene diamine tetracetic acid (PDTA) and methyl glycine di-acetic acid (MGDA), both in their acid form, or in their alkali metal, ammonium, and substituted ammonium salt forms. Particularly suitable amino carboxylates to be used herein are diethylene triamine penta acetic acid, propylene diamine tetracetic acid (PDTA) which is, for instance and methyl glycine di-acetic acid (MGDA). A preferred biodegradable chelating agent for use herein is ethylene diamine N,N'-disuccinic acid, or alkali metal, or alkaline earth, ammonium or substitutes ammonium salts thereof or mixtures thereof. Ethylenediamine N,N'- disuccinic acids, especially the (S,S) isomer has been extensively described in US 4,704, 233.

Useful phosphates include, but are not limited to, alkali metal diphosphate such as sodium potassium diphosphate, sodium pyrophosphate, sodium tripolyphosphate, and mixtures thereof.

Useful phosphonates include, but are not limited to, ethylene diaminetri(methylene phosphonate), ethylenediaminetetrakis (methylenephosphonates), ethylenediamine-N,N'-disuccinic acid (EDDS), diethylene triamine penta (methylene phosphonate) ("DTPMP"), ethylene diaminetri(methylene phosphonate), hexamethylene diamine tetra (methylene phosphonate) (EDTMP), α-hydroxy-2 phenyl ethyl diphosphonate, methylene diphosphonate, hydroxy 1,1-hexylidene diphosphonate, vinylidene 1,1 diphosphonate, ethane 1-hydroxy-1,1-diphosphonate, 1,2 dihydroxyethane 1,1 diphosphonate, hydroxy-ethylene 1,1 diphosphonate, ethane, 1,1,2-triphosphonate, and mixtures thereof.

Useful polyfunctionally-substituted aromatic chelating agents include, but are not limited to, dihydroxydisulfobenzenes such as 1,2-dihydroxy-3,5-disulfobenzene, and mixtures thereof.

Further carboxylate chelating agents to be used herein include salicylic acid, aspartic acid, glutamic acid, glycine, malonic acid or mixtures thereof.

Suitable bleaching agents are selected from the group consisting of hydrogen peroxide sources, preformed peroxycarboxylic acids, hypohalite bleach sources such as sodium hypochlorite and mixtures thereof.

As used herein, hydrogen peroxide sources refer to any compound that produces hydrogen peroxide when said compound is in contact with water or other solvent. Suitable hydrogen peroxide sources for use herein include persulfates, peroxodisulfate, persulfuric acid, percarbonates, perborates, metal peroxide, perphosphates, persilicates, urea peroxyhydrate and mixtures of two or more of the preceding compounds. Suitable counterions, if required, can be alkali metals and in particular sodium.

Suitable preformed peroxycarboxylic acids include those containing one, two or more peroxy groups, and can be aliphatic or aromatic. When the peroxycarboxylic acid is aliphatic, the unsubstituted acid preferably has the formula: HO-O-C(O)-(CH₂)ₙ-Y¹; wherein Y¹ can be, for example, H, CH₃, CH₂Cl, COOH, or C(O)OOH; and n is an integer from 1 to 20. Branched analogs are also acceptable. When the peroxycarboxylic acid is aromatic, the respective unsubstituted acid suitably has formula
HO-O-C(O)-C₆H₄-Y² wherein Y² is hydrogen, alkyl, C₁-C₄-alkylhalogen, halogen, or -COOH or -C(O)OOH, the preferred halogen being chlorine. Monoperoxycarboxylic acids useful as oxygen bleach herein are further illustrated by alkyl percarboxylic acids and aryl percarboxylic acids such as peroxybenzoic acid and ring-substituted peroxybenzoic acids, e.g., peroxy-α-naphthoic acid; aliphatic, substituted aliphatic and arylalkyl monoperoxy acids such as peroxylauric acid, peroxystearic acid, and N,N-phthaloylaminoperoxycaproic acid (PAP); and 6-octylamino-6-oxo-peroxyhexanoic acid. Peracids can be used in the acid form or as any suitable salt with a bleach-stable cation.

Suitable hypohalite bleaching agents may be provided by a variety of sources, including bleaching agents that lead to the formation of positive halide ions and/or hypohalite ions, as well as bleaching agents that are organic based sources of halides, such as chloroisocyanurates. Suitable hypohalite bleaching agents for use herein include the alkali metal and alkaline earth metal hypochlorite, hypobromite, hypoiodite, chlorinated trisodium phosphate dodecahydrate, potassium and sodium dichloroisocyanurates, potassium and sodium trichlorocyanurates, N-chloroimides, N-chloroamides, N-chloroamines and chlorohydantoins.

In one embodiment of the present invention, inventive porous materials comprise
in the range from 1 to 70, preferably 2 to 40% by weight foam (a),
in the range from 1 to 70, preferably 2 to 50 % by weight polymer matrix (b),
in the range from 0.1 to 30, preferably 1 to 10 % by weight active ingredient (c), percents being based on the respective whole inventive porous material.

In one embodiment of the present invention, said water-soluble or water-swellable polymer (b) is deposited in the form of one or more films in the pores of said erodible open-cell foam (a). Water-soluble or water-swellable polymer (b) then contains active ingredient in absorbed or dissolved or chemically linked form in said film or one or more of said film(s).

In one embodiment herein, inventive porous materials can further comprise from 5% to 20%, or from 10% to 15% by weight of free active ingredient based on the total amount of active ingredient contained in the respective inventive porous material. Said free active ingredient is selected from the group of surfactants, organic solvents, complexing agents, and bleaching agents. Said free active agent can ensure that active agent is available in the first several uses when active agent (c) in the absorbed or dissolved or chemically linked form may not have sufficient release yet. As used in contrast to active agent (c), "free active ingredient" means that the respective active ingredient is supplied to the cleaning implement in its neat form whose release is not controlled or sustained on purpose.

The present invention also provides a process for production of inventive modified foams, hereinafter also termed an inventive production process. The inventive production process comprises bringing into contact
(a) at least one open-cell foam with a density in the range from 5 to 500 kg/m³ and with an average pore diameter in the range from 1 µm to 1 mm
   with at least one mixture comprising
(b) at least one water-soluble or water-swellable or erodible polymer, which will form the polymer matrix (b), and
(c) an active ingredient selected from the group of surfactants, organic solvents, complexing agents, and bleaching agents.

Foam (a), water-soluble and water-swellable and erodible polymers (b) (in the context with the present invention also referred to as polymer (b) as well as active ingredients (c) have been characterised above.

After having brought foam (a) into contact with a mixture comprising polymer (b) and active ingredient (c), the aforementioned ingredients can be linked together either mechanically or by thermal treatment.

According to one embodiment of the present invention, foams (a) characterised above are contacted (brought into contact) with at least one polymer (b) and active ingredient (c), in molten or preferably dispersed or dissolved form.

According to the invention, foam (a) is contacted with polymer (b) and active ingredient (c), and polymer (b) may be in molten or preferably dispersed, in particular dissolved, form. It is particularly preferable to use polymer (b) dissolved in water.

Examples of ways of bringing about the contact are via immersion of foam (a) in polymer (b) and active ingredient (c) via saturation of foam (a) with polymer (b) and active ingredient (c) and active ingredient (c), via preferably complete spraying of foam (a) with polymer (b) and active ingredient (c), or via application of polymer (b) and active ingredient (c) to foam (a) by calendering.

If polymer (b) is used as dispersion or solution in water, it may be used in the form of aqueous formulations which comprise polymer (b) and active ingredient (c).

Aqueous formulations used according to the invention and comprising polymer (b) and active ingredient (c) preferably comprise from 0.05 to 40% by weight, with preference from 10 to 35% by weight, of one or more polymers (b), these preferably being in completely or partially neutralized form.

In one embodiment of the present invention, aqueous formulations used according to the invention and comprising polymer (b) can comprise sufficient substance(s) having basic action to neutralize quantitatively the carboxyl acid groups of the polymer(s) (b).

In one embodiment of the present invention, following the contact process, foam (a) and polymer (b) and active ingredient (c) may permitted to interact, for example over a period in the range from 1 second to 24 hours, preferably from 5 seconds to 10 hours, and particularly preferably from 10 seconds to 6 hours.

In one embodiment of the inventive production process, foam (a) and polymer (b) and active ingredient (c) are brought into contact at temperatures in the range from 0°C to 250°C, preferably from 5°C to 190°C, and particularly preferably from 10°C to 165°C.

In one embodiment of the inventive production process, foam (a) and polymer (b) and active ingredient (c) are first brought into contact at temperatures in the range from 0°C to 50°C, and then the temperature is changed, for example raised to temperatures in the range from 60°C to 250°C, preferably from 65°C to 180°C.

In another embodiment of the inventive production process, foam (a) and polymer (b) and active ingredient (c) are first brought into contact at temperatures in the range from 0°C to 120°C, and then the temperature is changed, for example raised to temperatures in the range from 30°C to 250°C, preferably from 125°C to 200°C.

In one preferred embodiment of the inventive production process, the selection of solvent and the temperature profile are such that there is no substantial alteration in most of the structure parameters of foam (a).

In another preferred embodiment of the present invention, the selection of the amounts of the starting materials - foam (a), polymer (b) and active ingredient (c), and, if appropriate, additives (c) - is such that inventive foam has markedly higher density than the relevant foam (a) used as starting material.

In one embodiment of the present invention, operations to carry out the inventive production process are carried out at atmospheric pressure. In another embodiment of the present invention, operations for carrying out the inventive process are carried out at elevated pressure, for example at pressures in the range from 1.1 bar to 10 bar. In another embodiment of the present invention, operations for carrying out the inventive production process are carried out at reduced pressure, for example at pressures in the range from 0.1 mbar to 900 mbar, preferably up to 100 mbar.

In one embodiment of the present invention, foam (a) is brought into contact with polymer (b) and active ingredient (c) in such a way that polymer (b) and active ingredient (c) becomes distributed with maximum uniformity in all dimensions over foam (a). Suitable methods are methods effective for application purposes. Examples which may be mentioned are: complete saturation, immersion, flow coating, drum-application, spray-application, e.g. compressed-air spraying, airless spraying, and highspeed rotary atomization, and also coating, doctor-application, calender-application, spreading, roller-application, wiper-application, and rolling.

In another embodiment of the present invention, foam (a) is brought into contact with polymer (b) and active ingredient (c) in such a way as to bring about non-uniform distribution of polymer (b) and active ingredient (c) on foam (a). For example, in one embodiment of the present invention foam (a) may be sprayed non-uniformly with polymer (b) and active ingredient (c) and the materials (a) and (b) may then be allowed to interact. In another embodiment of the present invention, foam (a) may be incompletely saturated with polymer (b) and active ingredient (c). In another embodiment of the present invention, a part of foam (a) may be brought into contact once, and another part of foam (a) may be brought into contact at least twice, with polymer (b) and active ingredient (c). In another embodiment, foam (a) is saturated and the uppermost layer is rinsed clean with, by way of example, water. The materials are then allowed to interact. The result is coating within the core of foam (a); the outer surface remains uncoated.

If foam (a) is brought into contact with polymer (b) and active ingredient (c) in such a way that non-uniform distribution of polymer (b) and active ingredient (c) has been brought about on foam (a), the effect achieved by, for example, allowing the materials to interact over a period of 2 minutes or more is that not just the outermost layer of foam (a) is brought into contact with polymer (b) and active ingredient (c).

If foam (a) is brought into contact with polymer (b) and active ingredient (c) in such a way as to bring about non-uniform distribution of polymer (b) and active ingredient (c) on foam (a), modified foam may, according to the invention, have mechanical properties that are non-uniform over its cross section. For example, according to the invention it is possible that it is harder at those sites where it has been brought into contact with relatively large proportions of at least one polymer (b) and active ingredient (c) than at those sites where it has been brought into contact with a smaller amount of polymer (b) and active ingredient (c).

In one embodiment of the present invention, rinsing may be carried out, for example using one or more solvents, and preferably using water, after contact.

In one embodiment of the present invention, after contact and after optional rinsing, drying may be carried out, for example mechanical drying, e.g. via squeezing or calendering, in particular via squeezing through two rollers, or thermally, for example in microwave ovens, hot-air blowers, or drying cabinets, in particular vacuum drying cabinets, the possible temperatures at which drying cabinets are operated being temperatures which are below the softening point or melting point of polymer (b) and active ingredient (c) by from 25 to 10°C. In the context of vacuum drying cabinets, vacuum may mean a pressure in the range from 0.1 to 850 mbar, for example.

The time taken for any desired drying steps is by definition excluded from the interaction time for the purposes of the present invention.

In one embodiment of the present invention, thermal drying may be brought about via heating to temperatures in the range from 20°C to 150°C, for example over a period of from 10 seconds to 20 hours. It is preferable to carry out heating to a temperature which is above, by at least 20°C, the glass transition temperature of polymer (b) and active ingredient (c), preferably to a temperature which is above, by at least 30°C, the glass transition temperature of polymer (b) used which is solid at room temperature. It is preferable to carry out heating to a temperature which is below the melting or drop point of polymer (b) used, for example below the melting or drop point of polymer (b) used by at least 5°C.

If a mixture of at least two different polymers (b) has been used, and if thermal drying is desired, heating is carried out to a temperature which is above, by at least 20°C, preferably at least 30°C, the glass transition temperature of the higher-glass-transition-temperature polymer (b). If a mixture of at least two different polymers (b) has been used, and if thermal drying is desired, heating is preferably carried out to a temperature which is below the melting point or drop point of all of the polymers (b) used, for example below the melting or drop point of the lowest-melting-point or lowest-drop-point polymer (b), by at least 5°C.

In one embodiment of the present invention, foam (a) may not only be brought into contact with at least one polymer (b) and active ingredient (c) but may also be brought into contact with at least additive (d) selected from:
biocides, such as silver particles or monomeric or polymeric organic biocides, such as phenoxyethanol, phenoxypropanol, glyoxal, thiadiazines, 2,4-dichlorobenzyl alcohols, and preferably isothiazolone derivatives, such as MIT (2-methyl-3(2H)-isothiazolone), CMIT (5-chloro-2-methyl-3(2H)-isothiazolone), CIT (5-chloro-3(2H)-isothiazolone), BIT (1,2-benzoisothiazol-3(2H)-one), and also copolymers of N,N-di-C₁-C₁₀-alkyl-ω-amino-C₂-C₄-alkyl (meth)acrylate, in particular copolymers of ethylene with N,N-dimethyl-2-aminoethyl (meth)acrylate,
solids, e.g. abrasive materials or fillers which may be inorganic or organic materials, e.g. sand, lime (CaCO₃), silicates with an average particle diameter (number-average) in the range from 1 µm to 1 mm, or colloidal silica, preferably inorganic material are selected from oxides, chlorides, sulfates, phosphates, carbonates of Mg, Mn, Ba, Ca, W, Zr, Ti, Si, Mo, in particular TiO₂, SiO₂ and Al₂O₃. Particularly preferred inorganic fillers are selected from zeolite based materials and silica based materials. Suitable zeolite based materials are described in the following reference texts: ZEOLITE SYNTHESIS, ACS Symposium Series 398, Eds. M. L. Occelli and H. E. Robson (1989) pages 2-7; ZEOLITE MOLECULAR SIEVES, Structure, Chemistry and Use, by D. W. Breck, John Wiley b Sons (1974) pages 245-250, 313-314 and 348-352. SiO₂ exists in a variety of crystalline forms and amorphous modifications, any of which are suitable for use herein. In particular, silicas having a high surface area or in agglomerated forms are preferred (i.e., clays or shells). Without being restrictive to a family of silica based materials, commonly silica which is in a highly purified form such that is contains at least 90%, preferably 95%, more preferably 99% silicon dioxide (i.e.: a silica gel having a 100% silica content, and fumed silica) is preferred. Alternatively, silica based materials may be provided from other sources such as metal silicates including sodium silicate. Further suitable materials are water-insoluble sodium polymetaphosphate, hydrated alumina, dicalcium orthophosphate dihydrate, calcium pyrophosphate, tricalcium phosphate, calcium polymetaphosphate.

Particularly preferred organic materials are polymers which may be thermoplastic polymeric materials. Suitable thermoplastic polymeric materials for use in the present invention are selected from the group consisting of polyolefins, polyesters, polyvinyl chlorides, polyamides, mixtures thereof and copolymers thereof. Specific examples of polymeric materials include but are not limited to polypropylene, polyethylene, polybutylene, polystyrene, polyethylene terephthalate, polyamide, polyacrylate, polyvinyl chloride, polyvinyl alcohol, ethylene vinyl acetate copolymers and mixtures thereof. Polymers may be in bead shape or randomly shaped. In the context of the present invention, bead-shaped polypropylene is particularly preferred.

Further examples for suitable additives (d) are:
dissolved materials as constituents of polymer (b),
carbon based materials such as carbon black, activated carbon, charcoal, activated or non-activated, and may be porous or not,
colorants, such as dyes or pigments,
lubricants, such as silicon oils, mineral oils, and fluorinated polymers,
cross-linkers, such as ionotropic cross-linkers and covalent cross-linkers, examples for ionotropic cross-linkers being charged minerals, charged silica, charged zeolite, charged hectorite, polyvalent cations, polyanions or/and polycations derived from Al, Cu, Zr; examples for covalent cross-linkers are organic molecules with at least two preferably non-conjugated C-C double bonds such as bis(meth)acrylates, tris(meth)acrylates, bis(meth)acrylamides, divinylethers, diallyl ethers, triallyl ethers, in particular N,N'-methylene bisacrylamide, ethylene glycol di(meth)acrylate, polyethylenglykol di(meth)acrylate derived from polyethylene glycol with a molecular weight M_{w} in the range from 106 to 2,000 g/mol, propylene glycol di(meth)acrylate, 1,4-butandiol di(meth)acrylate, 1,6-hexandiol di(meth)acrylate, 1,1,1-trimethylol propane tri(meth)acrylate, di- and trimesters of polyalcohols such as triols, tetraols, and polyols, diallylphthalate, divinylbenzene,
fragrances, e.g. perfume,
plasticizers such as polyesters which are liquid at room temperature, pentaerythrit tetrabenzoate, sugar esters such as sucrose benzoate, aromatic sulfonamides which are solids at room temperature such as ortho- and para-toluenesulfonamide, castor oil and castor oil derivatives, diacetin, reduced sugar such as sorbitol, monocarboxylic C₈-C₂₂-fatty acids and their derivatives, and citric acid esters, such as acetyltri-n-butylcitrate and triethylcitrate.

An example of a procedure for this purpose brings at least one foam (a) into contact, in different operations or preferably simultaneously, with at least one polymer (b), with active ingredient (c) and with at least additive (d).

In one embodiment of the present invention, one or more additives (d) may be added, for example in proportions of from 0 to a total of 50% by weight, based on polymer (b), preferably from 0.001 to 30% by weight, particularly preferably from 0.01 to 25% by weight, very particularly preferably from 0.1 to 20% by weight, to aqueous formulation used according to the invention and comprising polymer (b).

Inventive porous materials or porous materials produced by the inventive process have an advantageous range of properties. In particular, any active ingredient included in the inventive porous materials will be released in a constant rate over a long time. Furthermore, they have improved cleaning power or cleaning action, good resistance to hydrolysis, improved resistance to acid, good sound absorption, and - for example if used to produce cleaning materials - good durability. Soiling of the foams proceeds very slowly. Any inventive porous material which may have become soiled can readily be cleaned without irreversible damage.

Inventive porous materials can be used advantageously for production of cleaning materials, such as
wipers, brushes, cleaning cloths, cleaning implements or cleaning granules,
filters, such as air filters, pond filters, aquarium filters, water filters, or else as a matrix for ceramic filters,
humidifiers, water distributors,
packaging elements, in particular for impact- or water-sensitive products,
sound-deadening elements, buildings-insulation materials, in particular roof-insulation materials and wall-insulation materials.

If the intention is to use inventive porous materials for production of filters, preference is given to sack filters and matrices of ceramic filters. If the intention is to use inventive porous materials for production of automobile parts, ventilation units are particularly preferred.

A special method of using inventive porous materials is for the production of or as cleaning implements. "Cleaning implements" in the context of the present invention refer to an article of manufacture of any suitable shape and/or size and/or volume suitable for cleaning, i.e., removing spots and/ore stains from hard or soft surfaces. In a highly preferred embodiment according to the present invention, the cleaning implement herein is in a shape and/or size and/or volume suitable for use by a consumer to clean hard surfaces therewith.

Suitable shapes of the cleaning implements herein may be selected from the group consisting of: cube shape, rectangular shape, pyramid shape, cylindrical shape, cone shape, pencil eraser shape, cuboid shape, tetrahedron shape; sphere shape; globular shape; and ellipsoid shape. Preferably, said cleaning implement has a shape selected from the group consisting of: cube shape, rectangular shape, pencil eraser shape, and cuboid shape.

Suitable volumes of the cleaning implements herein may be from 1 cm³ to 10,000 cm³, preferably from 10 cm³ to 1,000 cm³, more preferably from 150 cm³ to 250 cm³.

In a highly preferred embodiment herein, cleaning implements herein have a cuboid shape defined by three groups of parallel and equal length sides, referred to as α, β and γ, wherein α ranges from 2 cm to 20 cm, preferably 4 cm to 8 cm, β ranges from 2 cm to 20 cm preferably 8 cm to 15 cm, and γ ranges from 1.5 cm to 5 cm, preferably 2 cm to 4 cm.

Cleaning implements of a particular embodiment of the present invention comprise a single layer of inventive porous material.

In another embodiment of the present invention, cleaning implements may comprise of at least two layers of inventive porous material.

In a preferred embodiment according to the present invention cleaning implements may comprise additional layers of material. Preferably, in the cleaning implement herein inventive porous material forms a first layer and said cleaning implement additionally comprises a second layer of material, e.g., of a second foam material as discussed herein below and particularly preferably of foam (a).

The layers of inventive porous material and second foam material or foam (a) may be arranged in said cleaning implement in any way suitable. In a preferred embodiment the layers of inventive porous material and second foam or foam (a) are arranged parallel to at least one side, preferably two opposite sides, of the cleaning implement. However, the cleaning implement may also have an irregular shape. Indeed, the thickness of the layers may be constant or vary throughout the cleaning implement. The separation line between the two layers may form a straight line or may form a bend or be completely irregular. In addition, the separation plane of the layers may be in the centre of cleaning implement, dividing the implement in two equal parts, or may be in the upper or lower part of the implement. In addition, the cleaning implement may be in the shape of a sphere or a globule or an ellipsoid with the separation plane of the layers forming a spherical segment or one of the layers, preferably the layer of a second foam here, forming a sphere in a sphere (similar to the layers of an onion).

In another highly preferred embodiment herein the cleaning implement herein is in the shape of a pencil eraser. By "shape of a pencil eraser" it is meant herein a voluminous body having six walls, wherein three pairs of parallel and equally shaped and sized walls exist and wherein one pair of walls are in the shape of a parallelogram and the remaining two pairs of walls are of rectangular shape.

In order to obtain suitable cleaning implements according to a preferred embodiment of the present invention, the inventive modified open-cell foam layer and the second layer of a second foam, in particular foam (a) have to be attached to each other. This attachment can be achieved by any attachment means suitable for joining the two layers. The attachment may be either a permanent attachment (wherein the two layers cannot be separated without inflicting substantial damage to the layers) or temporary attachment (wherein the two layers may be separated without inflicting substantial damage to the layers). Suitable attachment means providing a permanent attachment are selected from the group consisting of: foam flame laminating the two layers together; use of a permanent adhesive; sewing the two layers together; and needle-punching the two layers together; and combinations thereof. Suitable attachment means providing a temporary attachment are selected from the group consisting of: a weak adhesive; Velcro; and a water-based, water-soluble coating or adhesive; and combinations thereof.

In a preferred embodiment here, the attachment of layers herein is a permanent attachment. Even more preferably, the layers are joined together by foam flame lamination.

Foam flame lamination is a continuous process that can adhere foams and additional materials, if any, to one or both sides of a foam in a single pass. The process of flame lamination involves the passing of a first foam (either the modified open-cell foam herein or the second foam herein) over an open flame, which creates a thin layer of molten foam / polymer. A second foam (either the second foam herein or the inventive porous system herein, depending on the first step) is pressed against the first foam while it is still in the molten state. Foams and additional material, if any, can be adhered to one or both sides of the foam in a single pass. Furthermore, additional passes are optional. The strength of the bond depends upon the foams and additional material, if any, selected and the processing conditions (i.e., gas type, flame height and spread, foam burn-off and nip pressure).

The cleaning implement according to the present invention may contain more than two layers, wherein said additional layers, if, any, may be of the same or similar materials as the modified open-cell foam or said second foam, or may be made of another material having similar properties as said second foam or different properties therefrom. Preferably, inventive cleaning implements may be in a so-called sandwich configuration, wherein three layers are present.

The ratio of said inventive modified open-cell foam to said second foam in the cleaning implement according to the present invention is preferably from 20:1 to 1:20 by volume, more preferable from 10:1 1 to 1:10 by volume, even more preferably 5:1 to 1:1, still more preferably 5:1 to 2:1, and most preferably from 4:1 to 3:1 by volume.

In order to obtain suitable cleaning implements according to the present invention, the inventive modified open-cell foam- and second foam-raw materials may have to be modified in shape and/or size. Suitable means of modifying the shape and/or size of melamine foam- and second foam-raw materials may be selected from the group consisting of cutting, breaking, and tearing, and combinations thereof.

Suitable second foams for use herein are selected from the group of foams consisting of polyurethane foams, polypropylene foams, polyethylene foams, cellulose foam sponges; naturally occurring sponges, open-cell polyester foams, and cross-lined polyethylene foams; and combinations thereof. Particularly preferred is foam (a)

The thickness of said layer of a second foam is preferably up to 30 mm, preferably from 0.5 mm to 20 mm, more preferably from 1 mm to 15 mm, even more preferably from 2 mm to 10 mm, and most preferably from 4 mm to 8 mm.

The invention is illustrated by the means of examples.

### Examples

### I. Production of an inventive porous material

### I.1 Production of unmodified open-cell foam (a.1)

A spray-dried melamine-formaldehyde precondensate (molar ratio 1:3, molecular weight about 500) was added, in an open vessel, to an aqueous solution with 3% by weight of formic acid and 1.5% of the sodium salt of a mixture of alkylsulfonates having from 12 to 18 carbon atoms in the alkyl radical and (K 30 emulsifer from Bayer AG), the percentages being based on the melamine-formaldehyde precondensate. The concentration of the melamine-formaldehyde precondensate, based on the entire mixture composed of melamine-formaldehyde precondensate and water, was 74%. The resultant mixture was vigorously stirred, and then 20% of n-pentane were added. Stirring was continued (for about 3 min) until a dispersion of homogeneous appearance was produced. This was applied, using a doctor, onto a Teflon-treated glass fabric as substrate material and foamed and cured in a drying cabinet in which the prevailing air temperature was 150°C. The resultant temperature within the foam composition was the boiling point of n-pentane, which was 37.0 °C under these conditions. After from 7 to 8 min, the foam had risen to its maximum height. The foam was then left for a further 10 min at 150°C in the drying cabinet; it was then heat-conditioned for 30 min at 180°C. This gave unmodified foam (a.1).

### I.2 Production of inventive porous materials I.2.1 to I.2.27

The following properties were determined on the unmodified foam (a.1) from Example I.1:
open-cell factor to DIN ISO 4590: 99.6%,
compressive strength (40%): 1.3 kPa, determined to DIN 53577,
density: 10.0 kg/m³, determined to EN ISO 845,
average pore diameter: 210 µm, determined via evaluation of micrographs of sections, BET surface area: 6.4 m²/g, determined to DIN 66131.

Unmodified foam (a.1) from Example I.1 was cut into cuboid foam blocks with dimensions 23 mm. The weight of the cube-shaped foam blocks of foam (a.1) was 1.85 g each.

### Examples I.2.1 to I.2.8

A mixture comprising a polymer matrix (b) and an active ingredient (c) was prepared by mixing the components shown in Table 1 in a high-shear hotmelt blender (TM 20 twin screw extruder from Maris, Torino, Italy). All the percentages in the table are by weight based on the total weight of the respective mixture. An amount of 1.5 g of the respective mixture was then extruded onto the surface of a cuboid foam blocks (a.1) in a series of separate lanes at 70°C by a slot-coating nozzle (EP-11 from Nordson Germany or an LH-3 laboratory coater/laminator from Acumeter USA). After application of the melted controlled release system onto foam (a.1), a second substrate of an open-cell polyurethane foam (Sweetane™ series by Recticel) having a thickness of about 6 mm was adhered to the melamine foam substrate along the surface coated with the controlled release system by a polyamide hotmelt (commercially available as liquid-impermeable Fullback™ hotmelt from Fuller) adhesive. Thus, the respective polymer (b) and active ingredient (c) were located at the interface between foam (a.1) and the polyurethane foam. A cleaning implement was thus obtained. After the adherence of foam (a.1) and the polyurethane foam, the cleaning implement was squeezed for a few times or heated to a higher temperature to facilitate the penetration of the mixture of (b) and (c) into the melamine foam and the polyurethane foam.

**Table 1: Starting materials for the manufacture of inventive foams of examples I.2.1 to I.2.8**

| | I.2.1 | I.2.2 | I.2.3 | I.2.4 | I.2.5 | I.2.6 | I.2.7 | I.2.8 |
|---|---|---|---|---|---|---|---|---|
| (b.1) | 30% | | | | | | | |
| (b.2) | | 30% | | | | | | |
| (b.3) | | | 30% | | | | | |
| (b.4) | | | | 30% | | | | |
| (b.5) | | | | | 65% | 65% | 65% | 65% |
| (b.6) | 15% | 15% | 15% | | | | | |
| (b.7) | 5% | | | | | | | |
| (b.8) | | | | 20% | | | | |
| (c.1) | 40% | 40% | | | | | | |
| (c.2) | | | 40% | | | | | |
| (c.3) | | | | 35% | 35% | | | 15% |
| (c.4) | | | | | | 35% | | |
| (c.5) | | | | | | | 35% | |
| (c.6) | | | | | | | | 20% |
| (d.1) | 10% | | | | | | | |
| (d.2) | | 15% | | | | | | |
| (d.3) | | | 15% | 15% | | | | |

| | | | | | | | | |
|---|---|---|---|---|---|---|---|---|
| (b.1) random ethylene-vinyl acetate copolymer resin with 28 % by weight of vinyl acetate and 72 % by weight of ethylene, melt flow index 25 g/10 min according to ASTM D1238 at 190°C/load 2.16 kg, commercially available from DuPont as Elvax® 250 (b.2) polyethylene oxide-block co-poly-ε-caprolactam polymer, each block having M_{w} = 1500 g/mol, commercially available as Pebax® MH1657 from Atofina Chemicals (b.3) butylene/polyethylene glycol phthalate block copolyesters commercially available as Hytrel® 8171from DuPont (b.4) hydrophilic thermoplastic elastic polyurethanes from Noveon Estane™ 5170 (b.5) polyethylene glycol, M_{w} 9000 g/mol (b.6) a rosin ester tackifier from Eastman Chemical (b.7) poly-α-methylstyrene resin, M_{w} 1200 g/mol, which can serve as tackifier (b.8) polyethylene glycol, M_{w} 400 g/mol 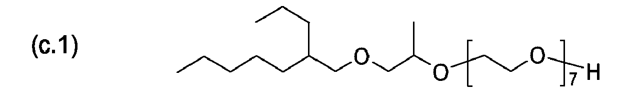 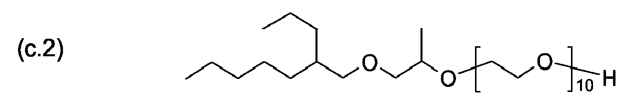 (c.3) n-C₁₈H₃₇-O(CH₂CH₂O)₂₅-H, (c.4) N,N-phthaloylaminoperoxycaproic acid (PAP) (c.5) sodium hypochlorite, (c.6) Propylene glycol n-butylether (d.1) acetyltri-n-butylcitrate, (d.2) triethylcitrate, (d.3) diacetin | | | | | | | | |

### Examples I.2.9 to I.2.16

A liquid mixture comprising a polymer matrix (b) and an active ingredient (c) was prepared by mixing the components shown in Table 2. All the percentages in the table are by weight based on the total weight of the respective mixture. An amount of 1 g of the liquid mixture was sprayed onto the surfaces of two melamine foams (a.1) each having a thickness of 10 mm, a length of 125 mm and a width of 65 mm, using an A7A spray guns from Nordso. The weight of the foam (a.1) substrate was 0.8 g before applying the respective mixture. In order to adhere the coated surfaces of foam (a.1) substrates to a third substrate of closed-cell polypropylene foam (available from Zotefoam, UK) having a thickness of about 10 mm in a sandwiched configuration, said third substrate was positioned between the two foam (a.1) substrates and adhered with a polyamide hotmelt (commercially available as liquid-impermeable Fullback™ hotmelt from Fuller) adhesive. A cleaning implement was thus obtained. The three-ply laminate cleaning implement was manually compressed to allow the penetration of the mixture into the foam. The cleaning implement was then air-dried to evaporate water and ethanol.

**Table 2: Starting materials for the manufacture of inventive foams of examples I.2.9 to I.2.16**

| | I.2.9 | I.2.10 | I.2.11 | I.2.12 | I.2.13 | I.2.14 | I.2.15 | I.2.16 |
|---|---|---|---|---|---|---|---|---|
| (b.9) | 70% | | 70% | | 70% | | 70% | |
| (b.10) | | 70% | | 70% | | 70% | | 70% |
| (c.2) | 20% | | | | | | | |
| (c.7) | 10% | | | | | | | |
| (c.3) | | 20% | | | | | | |
| (c.8) | | 10% | | | | | | |
| (c.4) | | | 30% | 30% | | | | |
| (c.5) | | | | | 30% | 30% | | |
| (c.9) | | | | | | | 30% | 30% |

| | | | | | | | | |
|---|---|---|---|---|---|---|---|---|
| (b.9) solution containing 70% by weight of polyethylene glycol grafted with polyvinyl acetate, 20% by weight of ethanol and 10% by weight of water. (b.10) mixture containing 60% by weight of polyvinyl alcohol (88% of which is hydrolyzed, the rest being acetylated), 10% by weight of ethanol and 30% by weight of water (c.7) Cetyl dimethyl amine oxide (c.8) linear C₁₂-alkyl benzene sulfonate surfactant (c.9) Cetyl pyridinium chloride | | | | | | | | |

### Examples I.2.17 to I.2.19

A mixture comprising β-cyclodextrin particles (available from Wacker Chemicals) having a diameter of about 150 µm, water and an active ingredient according to table 3 was prepared by mixing and stirring for four hours to yield a suspension. The respective suspension was then sprayed onto the surface of a foam (a.1) substrate having a thickness of about 14 mm. The weight of the foam (a.1) was 1.1 g before loading with the respective mixture. The loaded foam (a.1) was then attached to a second melamine foam substrate of equal thickness using Fullback™ adhesive from Fuller. A cleaning implement was thus obtained.

**Table 3**

| | I.2.17 | I.2.18 | I.2.19 |
|---|---|---|---|
| (b.11) | 1g | 1g | 1g |
| water | 5 ml | 5 ml | 5 ml |
| (c.10) | 0.25 g | | |
| (c.7) | | 0.25 g | |
| (c.8) | | | 0.25 g |

| | | | |
|---|---|---|---|
| (b.11) β-cyclodextrin from Wacker (c.10) n-C₁₀H₂₁O(CH₂CH₂O)₈H | | | |

### Example I.2.20

A particulate porous carrier mixture of 0.15 g zeolite A and 0.15 g mesoporous silica ZSM-5 having a particle diameter of 150 microns (determined by micrascopic analysis) was deposited into one of the two largest surfaces of a foam (a.1) substrate having a thickness of 14 mm and weight of 1.1 g before loading with the respective porous carrier mixture. A mixture of active ingredients: 0.067 g n-C₁₂H₂₅-(OCH₂CH₂)₃-OH, 0.033 g Amphosol™ (cocoamidopropyl betaine surfactant from Stepan) dissolved in 1 g water and then sprayed onto the zeolite/silica particles deposited on the surface of the foam (a.1) substrate. A second foam (a.1) substrate of about equal thickness and weight was then adhered to the loaded surface of the first foam (a.1) substrate by Fullback™ adhesive from Fuller. A cleaning implement was thus obtained.

### Examples I.2.21 and I.2.22

Example 20 was repeated except that the active ingredient was 0.1 g (c.3) (N,N-phthaloylaminoperoxycaproic acid, example I.2.21) or 0.1 g (c.9) (cetyl pyridinium chloride, example I.2.22), respectively, dissolved in 1 g of water.

### Example I.2.23

A mixture was prepared by mixing 0.3 g polyethyleneimine (b.12) and 0.15 g (c.8) in 5 ml of water to form a suspension. Said suspension was then deposited into one of the two largest surfaces of a foam (a.1) substrate having a thickness of 14 mm and weight of 1.1 g with the respective mixture. A second foam (a.1) substrate of about equal thickness and weight was then adhered to the surfaces of foam (a.1) loaded with the above mixture. A cleaning implement was thus obtained.

### Examples I.2.24 to I.2.26

Examples I.2.1 to I.2.3 were repeated except that 20% of the respective active ingredient (c) were loaded into the melamine foam substrate in a free form, i.e. not in the form of a mixture with the respective polymer (b), after the remaining 80% of the active agent in each example having been loaded into the melamine foam substrate as described in the respective previous example.

### II. Cleaning abilities of inventive cleaning implements

Inventive cleaning implements from I. were taken and wetted under running tab water (0,5I/12sec =7I/min) for 5 sec. Each of the inventive cleaning implements were then squeezed by hand, and the squeezed liquid was collected. For each example 4 replicates were made. The squeezed liquids were collected and analyzed with a bubble tensiometer (SITA-Blasentensiometer T60/2) to determine the concentration of the surfactant in said liquid. Results are summarized in Table.4. I.2.1 is the example just with surfactant without the release system. The concentration of the surfactant in the squeezed liquid was 0 ppm already after 20 squeezes.

**Table 4: Surfactant concentrations [ppm] in the squeezed liquids after 1-50 squeezes**

| # of squeezes | 1 | 5 | 10 | 15 | 20 | 25 | 30 | 35 | 40 | 45 | 50 |
|---|---|---|---|---|---|---|---|---|---|---|---|
| I.2.1 (ref) | 160 | 340 | 680 | 70 | 0 | 0 | 0 | 0 | 0 | 0 | 0 |
| I.2.5 | 60 | 320 | 320 | 500 | 380 | 360 | 180 | 100 | 10 | 0 | 0 |
| I.2.9 | 20 | 60 | 90 | 260 | 200 | 400 | 280 | 280 | 240 | 200 | 120 |
| I.2.17 | 50 | 160 | 160 | 120 | 60 | 10 | 0 | 0 | 0 | 0 | 0 |

Each of the fresh inventive cleaning implements was further used for cleaning the metal surface of a kitchen sink contaminated with resinous grease. After each wiping, the respective cleaning implement was wetted with water and then squeezed. Comparative cleaning implement I.2.1 lost its advantageous cleaning abilities after having been squeezed 14 times. Inventive cleaning implements kept their advantageous cleaning abilities after 25 squeezes (I.2.17) or more than 35 squeezes (I.2.5, I.2.9).

## Claims

1. A porous material comprising
(a) an erodible open-cell foam with a density in the range from 5 to 1,000 kg/m³ and with an average pore diameter in the range from 1 µm to 1 mm,
(b) a polymer matrix which is water-soluble or water-swellable or readily erodible,
(c) an active ingredient selected from the group of surfactants, organic solvents, complexing agents, and bleaching agents,
wherein said active ingredient (c) is absorbed by or dissolved in said polymer matrix (b) or chemically linked to said polymer matrix (b).

2. A porous material according to claim 1 in which polymer matrix (b) is selected from pasty or particulate water-soluble or water-swellable polymers.

3. A porous material according to any of claims 1 or 2, wherein said erodible open-cell foam (a) is selected from aminoplastic foams.

4. A porous material according to any of claims 1 to 3, wherein said erodible open-cell foam (a) is selected from aminoplastic foams which have been produced by foaming a precondensate of at least one organic di- or triamine with at least on carbonyl compound.

5. A porous material according to any of claims 1 to 4, wherein said water-soluble or water-swellable polymer (b) is selected from polyethylene glycols which are solid at room temperature, modified starch, cationic polymers and water-soluble anionic polymers.

6. A porous material according to any of claims 1 to 5, wherein said water-soluble or water-swellable polymer (b) is deposited in the form of one or more films in the pores of said erodible open-cell foam (a).

7. A porous material according to an of claims 1 to 6, wherein said readily erodible polymer (b) is selected from petroleum wax, microcrystalline wax, bio-wax, such as lanolin, candellila, carnauba, mineral wax, and synthetic wax, polyethylene wax, and polypropylene wax.

8. A process for production of porous materials according to any of the preceding claims, which comprises bringing into contact
(a) at least one erodible open-cell foam with a density in the range from 5 to 500 kg/m³ and with an average pore diameter in the range from 1 µm to 1 mm with at least one mixture comprising
(b) at least one water-soluble or water-swellable or erodible polymer, and
(c) an active ingredient selected from the group of surfactants, organic solvents, complexing agents, and bleaching agents.

9. The process according to claim 8, wherein said polymer (b) is sprayed on erodible open-cell foam (a).

10. The process according to any of claims 8 or 9, wherein a polymer which is to form polymer matrix (b) is first contacted and optionally chemically linked with active ingredient (c) and then brought into contact with open-cell foam (a).

11. The process according to any of claims 8 to 10, wherein open-cell foam (a) is selected from aminoplastic foams.

12. The process according to any of claims 8 to 11, wherein open-cell foam (a) is selected from aminoplastic foams which have been produced by foaming a precondensate of at least one organic di- or triamine with at least on carbonyl compound.
